(19) Europäisches Patentamt
European Patent Office
Office européen des brevets

(11) **EP 4 464 145 A1**

(12) # EUROPEAN PATENT APPLICATION

(43) Date of publication:
**20.11.2024   Bulletin 2024/47**

(21) Application number: **24176568.4**

(22) Date of filing: **17.05.2024**

(51) International Patent Classification (IPC):
**A01D 34/00** $^{(2006.01)}$       **A01D 34/78** $^{(2006.01)}$
**A01D 43/063** $^{(2006.01)}$

(52) Cooperative Patent Classification (CPC):
**A01D 34/006; A01D 34/78; A01D 43/063;**
A01D 34/64

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.05.2023   JP 2023083106**

(71) Applicant: **ISEKI & CO., LTD.**
**Matsuyama-shi**
**Ehime-ken 799-2692 (JP)**

(72) Inventors:
• **SUZUKI, Hiroto**
  **Ehime-ken, 791-2193 (JP)**
• **SUSUKI, Yuta**
  **Ehime-ken, 791-2193 (JP)**

(74) Representative: **TBK**
**Bavariaring 4-6**
**80336 München (DE)**

(54) **GRASS CUTTER**

(57)    The present inventors have noticed that usability when convenient functions are used is not necessarily good in a grass cutter of the related art.

A grass cutter includes a grass cutting device (100) that cuts grass; a battery (200) that supplies electric power for cutting the grass; a grass storage container (300) that stores the cut grass; and a controller (400). A work duration and a battery consumption required for a predetermined cutting amount of grass cutting work are detected. The controller (400) calculates a remaining duration during which the grass cutting work can be performed, based on the detected work duration, the detected battery consumption, and a battery level.

*FIG. 1*

EP 4 464 145 A1

**Description**

BACKGROUND OF THE INVENTION

1. Field of the Invention

The present invention relates to a grass cutter.

2. Description of Related Art

A work vehicle such as a work machine capable of temporarily accommodating a collected material collected during movement has been known, the work machine including: a main work machine; an accommodating auxiliary machine that accommodates the collected material collected by the main work machine, and that can travel between the main work machine and a predetermined collected material transport destination by separating from the main work machine; a travel drive device used for the traveling of the accommodating auxiliary machine; a battery that is mounted on the accommodating auxiliary machine, and that supplies electric power to the travel drive device; a battery level sensor that detects a battery level of the battery; and a control device that determines whether the accommodating auxiliary machine can be separated from the main work machine, based on the battery level (for example, refer to JP2018-102204A) .

Citation List

Patent Literature

PTL 1: JP 2018-102204 A

SUMMARY OF THE INVENTION

The present inventors think that the trend of convenient functions being implemented one after another in a grass cutter is accelerating in consideration of various needs of grass cutter users.
However, the present inventors have noticed that usability when the convenient functions are used is not necessarily good in the grass cutter of the related art.
More specifically, for example, the present inventors have noticed that an inexperienced work manager is often unable to easily grasp the amount of work corresponding to a current battery level in advance.
An object of the invention is to provide a grass cutter that can improve usability in consideration of the above-described problems of the related art.
According to a first aspect of the invention, there is a grass cutter including: a grass cutting device (100) that cuts grass; a battery (200) that supplies electric power for cutting the grass; a grass storage container (300) that stores the cut grass; and a controller (400). A work duration and a battery consumption required for a predetermined cutting amount of grass cutting work are detected. The controller (400) calculates a remaining duration during which the grass cutting work can be performed, based on the detected work duration, the detected battery consumption, and a battery level.
According to a second aspect of the invention, in the grass cutter according to the first aspect of the invention, the work duration is a duration during which the grass cutting device (100) is turned on.
According to a third aspect of the invention, in the grass cutter according to the second aspect of the invention, the battery level is a battery level when a storage amount of the grass storage container (300) reaches a predetermined amount.
According to a fourth aspect of the invention, the grass cutter according to the third aspect of the invention further includes a PTO switch that detects a turn-on and turn-off of a PTO mechanism (508) for supplying power to the grass cutting device (100). The battery consumption is a difference between a battery level when the PTO mechanism (508) is turned on and a battery level when the storage amount of the grass storage container (300) reaches the predetermined amount.
According to a fifth aspect of the invention, in the grass cutter according to the third aspect of the invention, the battery level is repeatedly detected a plurality of times each time the storage amount of the grass storage container (300) reaches the predetermined amount. The battery consumption is a difference between a battery level when the storage amount of the grass storage container (300) reaches the predetermined amount during a current cycle and a battery level when the storage amount of the grass storage container (300) reaches the predetermined amount during a previous cycle.
According to the first aspect of the invention, usability can be improved.

According to the second aspect of the invention, in addition to the effect of the first aspect of the invention, the burden on a worker can be reduced.

According to the third aspect of the invention, in addition to the effect of the second aspect of the invention, usability can be further improved.

According to the fourth aspect of the invention, in addition to the effect of the third aspect of the invention, the configuration can be simplified.

According to the fifth aspect of the invention, in addition to the effect of the third aspect of the invention, the configuration can be further simplified.

BRIEF DESCRIPTION OF THE DRAWINGS

FIG. 1 is a descriptive view of a grass cutter according to an embodiment of the invention;

FIG. 2 is a descriptive view (part 1) of the calculation of a remaining grass cutting work duration of the grass cutter according to the embodiment of the invention;

FIG. 3 is a descriptive view (part 2) of the calculation of a remaining grass cutting work duration of the grass cutter according to the embodiment of the invention;

FIG. 4 is a descriptive view (part 3) of the calculation of a remaining grass cutting work duration of the grass cutter according to the embodiment of the invention;

FIG. 5 is a descriptive view (part 4) of the calculation of a remaining grass cutting work duration of the grass cutter according to the embodiment of the invention; and

FIG. 6 is a descriptive view (part 5) of the calculation of a remaining grass cutting work duration of the grass cutter according to the embodiment of the invention.

DESCRIPTION OF EMBODIMENTS

An embodiment of the invention will be described in detail with reference to the drawings.

The same applies below, but some components may not be shown in the drawings, or may be shown in a perspective or simplified manner.

While the operation of a grass cutter of the present embodiment is described, an inventive work vehicle operation control method related to the invention, which is realized by a controller 400 and the like, will also be described.

The grass cutter of the present embodiment is a specific example of a work vehicle of the invention.

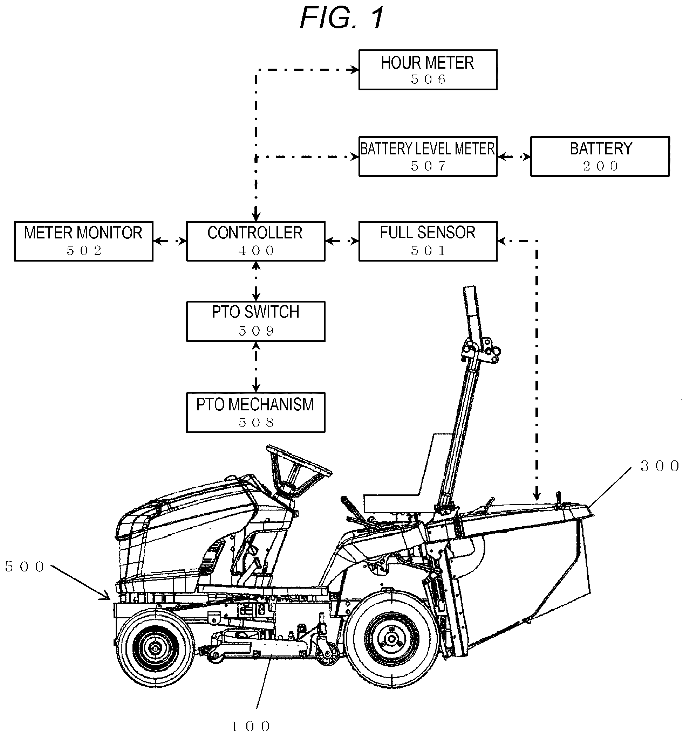

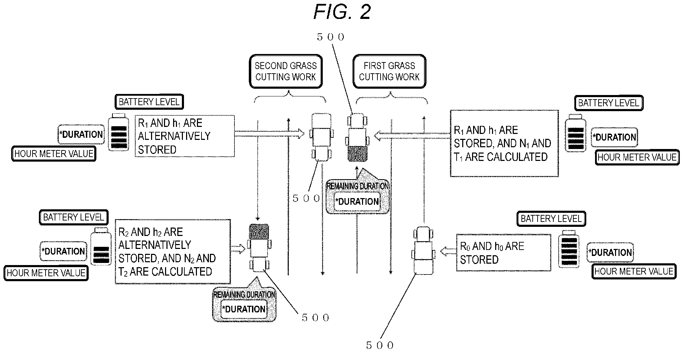

(1) First, a configuration and operation of the grass cutter according to the embodiment of the invention will be specifically described with reference to mainly FIGS. 1 and 2.

Here, FIG. 1 is a descriptive view of the grass cutter according to the embodiment of the invention, and FIG. 2 is a descriptive view (part 1) of the calculation of a remaining grass cutting work duration of the grass cutter according to the embodiment of the invention.

A grass cutting device 100 is a unit that cuts grass, a battery 200 is a unit that supplies electric power for at least cutting grass, and a grass storage container 300 is a unit that stores the cut grass. When one grass cutting work is performed until the grass storage container 300 that is empty becomes full, a grass cutting work duration and a grass cutting work battery consumption of the battery 200 during the grass cutting work are detected.

More specifically, the grass cutter of the present embodiment is a riding electric grass cutter in which not only a full sensor 501 that detects the full state of the grass storage container 300 but also a meter monitor 502 that displays a cumulative grass cutting work duration measured by an hour meter 506 are mounted in a vehicle body 500.

The controller 400 calculates a remaining grass cutting work duration for further performing grass cutting work based on the detected remaining grass cutting work duration, the detected grass cutting work battery consumption, and the battery level of the battery 200 during grass cutting work. The battery level during grass cutting work is a battery level detected when the grass storage container 300 becomes a full state during grass cutting work.

More specifically, the controller 400 calculates the remaining grass cutting work duration, for example, based on the battery consumption of the battery 200 during one grass cutting work until the grass storage container 300 becomes full, the battery level of the battery 200 at the point of time, and one grass cutting work duration, and causes the meter monitor 502 to display the calculated remaining grass cutting work duration.

A mode in which only the battery level is displayed can also be considered; however, since the remaining grass cutting work duration is displayed, even an inexperienced work manager or the like can easily grasp the amount of work corresponding to a current battery level in advance.

In FIG. 2, a schematic image of the calculation of a remaining grass cutting work duration is shown.

By displaying the remaining grass cutting work duration, not only can work planning be easily performed, but also the timing of charging or replacing the battery 200 can be easily determined. Since the remaining grass cutting work duration is calculated by multiplying a remaining grass cutting work number by the one grass cutting work duration, the remaining grass cutting work number itself may be displayed instead of the remaining grass cutting work duration.

Since a configuration in which the remaining grass cutting work duration calculated by the controller 400 as a vehicle controller is displayed on the meter monitor 502 is adopted, the remaining grass cutting work duration can be calculated while acquiring and storing information from the full sensor 501, the hour meter 506, and a battery level meter 507.

The battery 200 is a battery that also supplies electric power for traveling. A unit battery consumption for traveling does not exceed a predetermined level.

The grass cutting work duration is the duration during which the grass cutting device 100 is turned on.

More specifically, the grass cutting work duration is acquired by integrating the PTO-on time detected by a PTO switch 509 that detects the turn-on and turn-off of a PTO mechanism 508 for supplying power to the grass cutting device 100.

Typically, in order to discharge cut grass at a nearby grass accumulation point, a round-trip travel between the point where the grass storage container 300 becomes full and the grass accumulation point is performed over a relatively short round-trip distance, and then grass cutting work is started again with the grass storage container 300 that is emptied.

An electric power consumption when traveling is performed without work being performed is significantly smaller than an electric power consumption when work is performed, and the grass cutting work duration can be calculated with high accuracy by integrating the duration during which grass cutting work is performed.

Normally, the above-described round-trip travel between the point where the grass storage container 300 becomes full and the grass accumulation point does not significantly change not only the battery level but also an hour meter value of the hour meter 506; however, with regard to the hour meter value, it is desirable to integrate only the duration during which such grass cutting work is performed.

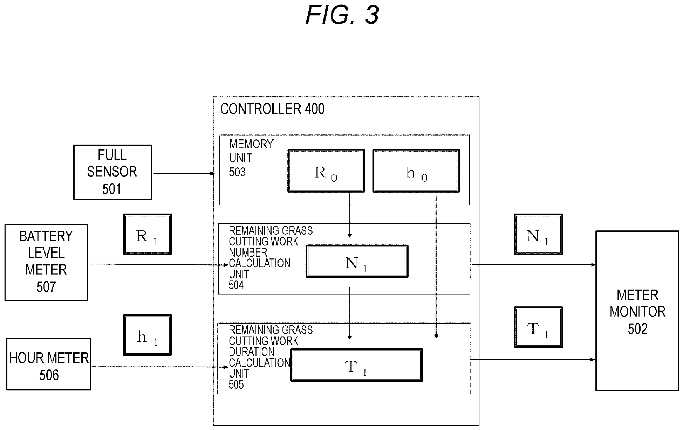

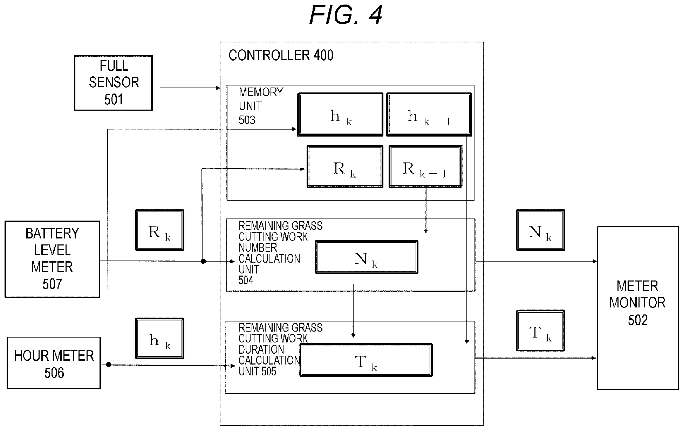

(2) Next, the configuration and operation of the grass cutter according to the embodiment of the invention will be more specifically described with reference to mainly FIGS. 3 and 4.

Here, FIGS. 3 and 4 are descriptive views (part 2 and part 3) of the calculation of a remaining grass cutting work duration of the grass cutter according to the embodiment of the invention.

Grass cutting work is repeated a plurality of times. The battery level during the current grass cutting work is a battery level detected when the grass storage container 300 becomes a full state during the current grass cutting work.

A work battery consumption during the current grass cutting work is a difference between a battery level detected when the grass storage container 300 becomes an empty state during the current grass cutting work and a battery level detected when the grass storage container 300 becomes a full state during the current grass cutting work.

In FIG. 3, a method for calculating a remaining grass cutting work duration during a first grass cutting work is shown.

A battery level $R_0$ and an hour meter value $h_0$ at the PTO-on point of time that the first grass cutting work is started are stored in a memory unit 503 by the controller 400.

When the grass storage container 300 that is a cut grass storage collector becomes full, the full sensor 501 operates, and a battery level $R_1$ and an hour meter value $h_1$ at the point of time are stored in the memory unit 503 by the controller 400.

A battery consumption $C_1$ by the first grass cutting work is determined as

(Math. 1)

$$C_1 = R_0 - R_1$$

a remaining grass cutting work number calculation unit 504 calculates an initial remaining grass cutting work number $N_1$ as

(Math. 2)

$$N_1 = R_1/C_1 = R_1/(R_0 - R_1)$$

a remaining grass cutting work duration calculation unit 505 calculates an initial remaining grass cutting work duration $T_1$ as

(Math. 3)

$$T_1 = N_1 \times (h_1 - h_0) = (h_1 - h_0) \times R_1 / (R_0 - R_1)$$

by multiplying the remaining grass cutting work number $N_1$ by a first grass cutting work duration $h_1 - h_0$ calculated from the hour meter values $h_0$ and $h_1$.

A battery level detected when the grass storage container 300 becomes full during the previous grass cutting work is also used as the battery level detected when the grass storage container 300 becomes empty during the current grass cutting work.

In FIG. 4, a method for calculating a remaining grass cutting work duration during a k-th ($\geq 2$) grass cutting work is shown. Since the remaining grass cutting work duration changes from moment to moment due to the cut grass, the state of the battery 200, and the like, a latest remaining grass cutting work duration can be known by performing a calculation every time the grass storage container 300 becomes full.

With regard to the k-th grass cutting work, as a battery level and an hour meter value at the PTO-on point of time that the k-th grass cutting work is started, a battery level $R_{k-1}$ and an hour meter value $h_{k-1}$ when the grass storage container 300 becomes full during a k-1-th grass cutting work are alternatively stored in the memory unit 503 by the controller 400.

With regard to the k-th grass cutting work as well, when the grass storage container 300 becomes full, the full sensor 501 operates, and a battery level $R_k$ and an hour meter value $h_k$ at the point of time are stored in the memory unit 503 by the controller 400.

A battery consumption $C_k$ by the k-th grass cutting work is determined as

(Math. 4)

$$C_k = R_{k-1} - R_k$$

the remaining grass cutting work number calculation unit 504 calculates a latest remaining grass cutting work number $N_k$ as

(Math. 5)

$$N_k = R_k / C_k = R_k / (R_{k-1} - R_k)$$

the remaining grass cutting work duration calculation unit 505 calculates a latest remaining grass cutting work duration $T_k$ as

(Math. 6)

$$T_k = N_k \times (h_k - h_{k-1}) = (h_k - h_{k-1}) \times R_k / (R_{k-1} - R_k)$$

by multiplying the remaining grass cutting work number $N_k$ by a k-th grass cutting work duration $h_k - h_{k-1}$ calculated from the hour meter values $h_{k-1}$ and $h_k$.

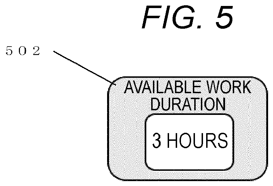

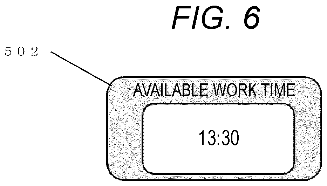

(3) Next, the configuration and operation of the grass cutter according to the embodiment of the invention will be more specifically described with reference to mainly FIGS. 5 and 6.

Here, FIGS. 5 and 6 are descriptive views (part 4 and part 5) of the calculation of a remaining grass cutting work duration of the grass cutter according to the embodiment of the invention.

First, the storage of a remaining grass cutting work duration will be described.

A mode in which when the grass cutting work is completed and electric power of the grass cutter is turned off, a remaining grass cutting work duration at the point of time is stored by the controller 400, and when electric power of the grass cutter is turned on at a next start-up, the remaining grass cutting work duration is displayed on the meter monitor 502 can be considered. For example, when electric power of the grass cutter is turned on at a start-up the next day, a remaining grass cutting work duration when the grass cutting work of the previous day is completed can be easily known.

A mode in which when the grass cutting work is completed and electric power of the grass cutter is turned off, the remaining grass cutting work duration at the point of time is not stored, and when electric power of the grass cutter is turned on at a next start-up, the remaining grass cutting work duration is not displayed can be considered. For example, when electric power of the grass cutter is turned on at a start-up the next day, the remaining grass cutting work duration when the grass cutting work of the previous day is completed is not displayed; however, when the first grass cutting work is completed, the accurate remaining grass cutting work duration can be known in real time. Since the remaining grass cutting work duration is likely to change due to so-called field conditions that are affected by temperature or the like, it is often desirable to notify a worker of the latest remaining grass cutting work duration without displaying the past remaining grass cutting work duration that can cause confusion for the worker.

Next, the display of a remaining grass cutting work duration will be described.

In FIG. 5, a duration display method for a remaining grass cutting work duration during grass cutting work is shown. Since the calculated remaining grass cutting work duration itself is displayed on the meter monitor 502, it is easy to grasp the duration during which grass cutting work can be performed, such as "3 hours".

In FIG. 6, a time display method for a remaining grass cutting work duration during grass cutting work is shown. Since a time obtained by adding the calculated remaining grass cutting work duration to a current time is displayed on the meter monitor 502, it is easy to grasp the time that grass cutting work cannot be performed, such as "13:30".

An inventive program related to the invention is a program for causing a computer to execute all or some of the operations of the steps (or processes, operations and actions, or the like) of the inventive work vehicle operation control method related to the invention described above, and is a program that operates in cooperation with the computer.

In addition, an inventive recording medium related to the invention is a recording medium on which a program for causing a computer to execute all or some of the operations of all or some of the steps (or processes, operations and actions, or the like) of the inventive work vehicle operation control method related to the invention described above, and is a computer-readable recording medium on which the read program is used in cooperation with the computer.

The above-described "some of the steps (or processes, operations and actions, or the like)" means one or some steps among a plurality of the steps.

In addition, the above-described "operations of the steps (or processes, operations and actions, or the like)" means all or some of the operations of the above-described steps.

In addition, one mode of use of the inventive program related to the invention may be a mode in which the program is transmitted in a transmission medium such as the Internet, light, radio waves, sound waves, or the like, is read by the computer, and operates in cooperation with the computer.

In addition, examples of the recording medium include a read only memory (ROM) and the like.

In addition, the computer is not limited to pure hardware such as a central processing unit (CPU), and may include firmware, an operating system (OS), and additionally, peripheral devices.

As described above, the configuration of the invention may be realized in software or in hardware.

The work vehicle of the invention can improve usability, and is useful for the purpose of being used in a work vehicle such as a grass cutter.

## Claims

1.  A grass cutter comprising:

    a grass cutting device (100) that cuts grass;
    a battery (200) that supplies electric power for cutting the grass;
    a grass storage container (300) that stores the cut grass; and
    a controller (400),
    wherein a work duration and a battery consumption required for a predetermined cutting amount of grass cutting work are detected, and
    the controller (400) calculates a remaining duration during which the grass cutting work can be performed, based on the detected work duration, the detected battery consumption, and a battery level.

2.  The grass cutter according to claim 1,
    wherein the work duration is a duration during which the grass cutting device (100) is turned on.

3.  The grass cutter according to claim 2,

wherein the battery level is a battery level when a storage amount of the grass storage container (300) reaches a predetermined amount.

4. The grass cutter according to claim 3, further comprising:

a PTO switch that detects a turn-on and turn-off of a PTO mechanism (508) for supplying power to the grass cutting device (100),
wherein the battery consumption is a difference between a battery level when the PTO mechanism (508) is turned on and a battery level when the storage amount of the grass storage container (300) reaches the predetermined amount.

5. The grass cutter according to claim 3,

wherein the battery level is repeatedly detected a plurality of times each time the storage amount of the grass storage container (300) reaches the predetermined amount, and
the battery consumption is a difference between a battery level when the storage amount of the grass storage container (300) reaches the predetermined amount during a current cycle and a battery level when the storage amount of the grass storage container (300) reaches the predetermined amount during a previous cycle.

## FIG. 1

HOUR METER
506

BATTERY LEVEL METER
507

BATTERY
200

METER MONITOR
502

CONTROLLER
400

FULL SENSOR
501

PTO SWITCH
509

PTO MECHANISM
508

300

500

100

# FIG. 2

# FIG. 3

CONTROLLER 400

MEMORY UNIT 503

$R_0$    $h_0$

FULL SENSOR 501

BATTERY LEVEL METER 507

$R_1$

REMAINING GRASS CUTTING WORK NUMBER CALCULATION UNIT 504

$N_1$

HOUR METER 506

$h_1$

REMAINING GRASS CUTTING WORK DURATION CALCULATION UNIT 505

$T_1$

$N_1$

$T_1$

METER MONITOR 502

## FIG. 4

CONTROLLER 400

FULL SENSOR 501

MEMORY UNIT 503

$h_k$  $h_{k-1}$

$R_k$  $R_{k-1}$

BATTERY LEVEL METER 507

$R_k$

REMAINING GRASS CUTTING WORK NUMBER CALCULATION UNIT 504

$N_k$

$N_k$

METER MONITOR 502

HOUR METER 506

$h_k$

REMAINING GRASS CUTTING WORK DURATION CALCULATION UNIT 505

$T_k$

$T_k$

# FIG. 5

502

AVAILABLE WORK
DURATION

3 HOURS

## FIG. 6

502

AVAILABLE WORK TIME

13:30

Europäisches
Patentamt

European
Patent Office

Office européen
des brevets

# EUROPEAN SEARCH REPORT

Application Number

EP 24 17 6568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 175945 A (ISEKI AGRICULT MACH) 13 September 2012 (2012-09-13) | 1,2 | INV. A01D34/00 A01D34/78 A01D43/063 |
| A | * See written opinion * | 3-5 | |
| X | US 2021/389735 A1 (FUNK JON [US]) 16 December 2021 (2021-12-16) | 1,2 | |
| A | * See written opinion * | 3-5 | |
| Y | EP 4 089 500 A1 (YAMABIKO CORP [JP]) 16 November 2022 (2022-11-16) | 1,2 | |
| A | * See written opinion * | 3-5 | |
| Y | CN 107 493 799 A (DEQING JINGYING INFORMATION TECH CO LTD) 22 December 2017 (2017-12-22) * See written opinion * | 1,2 | |
| Y | GB 2 230 414 A (HUNT JEFFREY ERNEST) 24 October 1990 (1990-10-24) * See written opinion * | 1,2 | |
| Y | US 7 185 478 B1 (WILLIS II HULEN J [US]) 6 March 2007 (2007-03-06) * See written opinion * | 1,2 | TECHNICAL FIELDS SEARCHED (IPC) A01D |
| A | EP 3 486 109 A1 (KUBOTA KK [JP]) 22 May 2019 (2019-05-22) * See written opinion * | 1 | |
| A | EP 0 817 352 A2 (BLACK & DECKER INC [US]) 7 January 1998 (1998-01-07) * See written opinion * | 3 | |

The present search report has been drawn up for all claims

| Place of search | Date of completion of the search | Examiner |
|---|---|---|
| Munich | 9 October 2024 | Karstens, Thede |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 17 6568

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2024

| Patent document cited in search report | | Publication date | Patent family member(s) | | Publication date |
|---|---|---|---|---|---|
| JP 2012175945 | A | 13-09-2012 | JP | 5776221 B2 | 09-09-2015 |
| | | | JP | 2012175945 A | 13-09-2012 |
| US 2021389735 | A1 | 16-12-2021 | US | 2021389735 A1 | 16-12-2021 |
| | | | WO | 2020079480 A1 | 23-04-2020 |
| EP 4089500 | A1 | 16-11-2022 | EP | 4089500 A1 | 16-11-2022 |
| | | | JP | 7408495 B2 | 05-01-2024 |
| | | | JP | 2021197068 A | 27-12-2021 |
| | | | US | 2022374017 A1 | 24-11-2022 |
| | | | WO | 2021256003 A1 | 23-12-2021 |
| CN 107493799 | A | 22-12-2017 | NONE | | |
| GB 2230414 | A | 24-10-1990 | NONE | | |
| US 7185478 | B1 | 06-03-2007 | NONE | | |
| EP 3486109 | A1 | 22-05-2019 | EP | 3486109 A1 | 22-05-2019 |
| | | | JP | 6811698 B2 | 13-01-2021 |
| | | | JP | 2019097272 A | 20-06-2019 |
| | | | US | 2019156595 A1 | 23-05-2019 |
| EP 0817352 | A2 | 07-01-1998 | EP | 0585021 A2 | 02-03-1994 |
| | | | EP | 0817352 A2 | 07-01-1998 |
| | | | US | 5490370 A | 13-02-1996 |

EPO FORM P0459

For more details about this annex : see Official Journal of the European Patent Office, No. 12/82

**EP 4 464 145 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018102204 A